# EUROPEAN PATENT APPLICATION

(11) **EP 1 450 286 A1**
(43) Date of publication of application: **25.08.2004**
(21) Application number: 04250961.2
(22) Date of filing: 23.02.2004
(51) Int. Cl.: G06F 17/60

(54) **Methods and system for optimizing and for estimating expected risk and returns for a portfolio of assets**

(30) Priority: 24.02.2003 US 374443
(71) Applicant: Dubin & Swieca Capital Management, LLC, New York, New York 10019-2701 (US)
(72) Inventor: French, Craig W., Yardley Pennsylvania 19067 (US)
(74) Representative: Smith, Samuel Leonard

(57) **Abstract**

Methods for estimating expected risk and expected returns associated with a portfolio of assets are disclosed along with methods for optimizing a portfolio of assets. In one embodiment, subjective opinion of at least one analyst is incorporated into the estimation process. In another embodiment, subjective opinion of at least one analyst is incorporated into the optimization process. In a further embodiment, models are not utilized in order to avoid the introduction of structural biases into the estimation and optimization processes.

## Description

### BACKGROUND OF THE INVENTION

The process of portfolio selection may be approached by estimating the future performance of assets, analyzing those estimates to determine an efficient set of portfolios, and selecting from that set the portfolio best suited to an investor's preferences. A portfolio of assets may be expressed as a column vector of returns and a matrix of covariances and variances, weighted by the amounts allocated to each asset. The expression of such a portfolio follows the paradigm of what is commonly referred to as the "modern portfolio theory." Within this paradigm, managers of assets are assumed to prefer more expected return to less, and less expected risk to more. Expected risk may be expressed as the variance or standard deviation of the expected portfolio returns. The portfolio optimization problem is therefore to maximize expected portfolio return while simultaneously minimizing expected portfolio variance.

In the problem of optimizing portfolios of assets, practitioners of the art of investment management commonly base their estimates of the column vector of expected returns and their estimates of the matrix of covariances and variances exclusively on data obtained from historical samples. For example, statistical estimators such as the James-Stein statistic, which can be used to estimate elements of the return vector, the Ledoit and Wolf statistic, which can be used to estimate elements of the covariance matrix, and the Frost-Savorino statistic, which, as a joint estimator, can be used to estimate elements comprising both the return vector and the covariance matrix, base their estimates on historical data. However, the James-Stein statistic can only estimate elements of the return vector, and the Ledoit and Wolf statistic can only estimate elements of the covariance matrix. Additionally, the Frost-Savorino statistic can only generate an integrated estimate of the return vector and of the covariance matrix; it cannot be used to estimate either the return vector or the covariance matrix independently.

Furthermore, it has been found empirically in the capital markets that historical samples are not necessarily good estimators of future distributions. Thus, it may be beneficial to incorporate the subjective judgment of one or more analysts, e.g., a portfolio manager or other analysts, into the estimation of the column vector of expected returns, the estimation of the matrix of covariances and variances, or both, in order to avoid the estimation error inherent in the use of historical data alone. The Black-Litterman model incorporates the subjective future return expectations of an investor with the return estimates generated by an equilibrium returns model, which is then used to populate the return vector. However, the Black-Litterman model only determines estimates that populate the return vector, not the covariance matrix. Additionally, the Black-Litterman model is dependent upon an equilibrium model, which can introduce structural biases into the portfolio optimization problem.

Accordingly, what is needed in the art is a process that will incorporate the subjective viewpoints of analysts regarding future expected returns, variances and covariances, into the estimation of the column vector of expected returns and/or the matrix of covariances and variances while avoiding structural biases, which can be introduced through the use of models. The present invention provides such a process.

### SUMMARY OF THE INVENTION

A method for estimating expected risk associated with a portfolio of assets is provided. Expected risk may be expressed as a matrix of variances and covariances of expected portfolio returns. A sample matrix of variances and covariances is derived based on sample data. A subjective matrix of variances and covariances is derived based on subjective opinion. An estimated matrix of variances and covariances is then derived based on the sample and subjective matrices.

In addition, a method for estimating expected returns associated with a portfolio of assets is provided. Expected returns may be expressed as a column vector of returns. A sample column vector of returns is derived based directly on sample data. A subjective column vector of returns is derived based on subjective opinion. An estimated column vector of returns is then derived based on the sample and subjective column vectors.

Further, a method for optimizing a portfolio of assets is provided. A column vector of returns for the portfolio of assets is estimated. A matrix of variances and covariances for the portfolio of assets is also estimated. The matrix of variances and covariances is modified by incorporating subjective opinion into the matrix of variances and covariances. The portfolio of assets is then optimized based on the column vector of returns and the modified matrix of variances and covariances. In another embodiment, the column vector of returns is also modified by incorporating subjective opinion into the column vector of returns and the portfolio of assets is optimized based on the modified column vector of returns and the modified matrix of variances and covariances.

According to the present invention there is also provided a computer program comprising program code means for performing all the steps of the method when said program is run on a computer and a computer program product comprising program code means stored on a computer readable medium for performing the method when said program product is run on a computer. A further understanding of the nature and advantage of the present invention may be realized by reference to the remaining portions of the specification and drawings.

### BRIEF DESCRIPTION OF THE DRAWINGS

Fig. 1 is a flow diagram showing a method for estimating expected risk associated with a portfolio of assets;

Fig. 2 illustrates one method for estimating expected risk associated with a portfolio of assets;

Fig. 3 depicts an example relating to the method illustrated in Fig. 2;

Fig. 4 illustrates another method for estimating expected risk associated with a portfolio of assets;

Fig. 5 depicts one example relating to the method illustrated in Fig. 4;

Fig. 6 illustrates a further method for estimating expected risk associated with a portfolio of assets;

Fig. 7 depicts an example relating to the method illustrated in Fig. 6;

Figs. 8-10 illustrate other methods for estimating expected risk associated with a portfolio of assets;

Fig. 11 depicts one example relating to the method illustrated in Fig. 10;

Figs. 12-14 illustrate various methods for estimating expected risk associated with a portfolio of assets;

Fig. 15 depicts an example relating to the method illustrated in Fig. 14;

Fig. 16 illustrates a method for estimating expected risk associated with a portfolio of assets;

Fig. 17 depicts one example relating to the method illustrated in Fig. 16;

Fig. 18 is a flow diagram of a method for estimating expected returns associated with a portfolio of assets;

Fig. 19 illustrates one method for estimating expected returns associated with a portfolio of assets;

Fig. 20 depicts an example relating to the method illustrated in Fig. 19;

Fig. 21 illustrates another method for estimating expected returns associated with a portfolio of assets;

Fig. 22 depicts one example relating to the method illustrated in Fig. 21;

Fig. 23 illustrates a further method for estimating expected returns associated with a portfolio of assets;

Fig. 24 depicts an example relating to the method illustrated in Fig. 23;

Figs. 25-26 illustrate various methods for optimizing a portfolio of assets; and

Fig. 27 is a diagram of a computer system with which the present invention can be implemented.

### DESCRIPTION OF THE SPECIFIC EMBODIMENTS

Methods for estimating expected returns and expected risk associated with a portfolio of assets are disclosed along with methods for optimizing a portfolio of assets. Rather basing estimates solely on historical data, which contains inherent estimation errors, subjective opinion of at least one analyst relating to future performance of at least one asset in the portfolio is incorporated into the estimation and optimization processes. In one embodiment, models are not used in estimating expected returns as models can introduce structural biases.

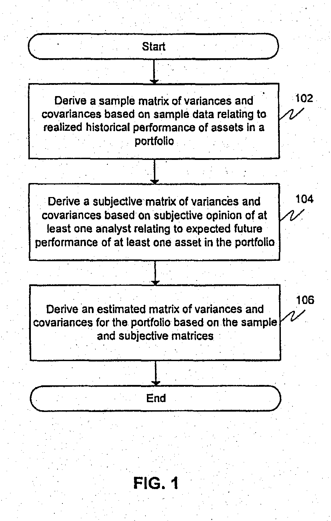

Fig. 1 illustrates a method for estimating expected risk associated with a portfolio of assets. Expected risk may be expressed as a matrix of variances and covariances of expected portfolio returns. A sample matrix of variances and covariances is derived based on sample data relating to realized historical performance of assets in a portfolio (102). For example, elements of a sample matrix may be estimated by calculating the mean, i.e., the average, of historical variances and covariances. In other embodiments, the median, the mode, or a mix of the mean, median, and mode of historical sample data may be used to estimate elements of a sample matrix. Further, elements of a sample matrix may be estimated using a factor model, an index model, an equilibrium model, an arbitrage model, statistical estimators such as the Ledoit and Wolf statistic and the Frost-Savorino statistic, or any other method. A subjective matrix of variances and covariances is derived based on subjective opinion of at least one analyst relating to expected future performance of at least one asset in the portfolio (104). An estimated matrix of variances and covariances of expected portfolio returns is then derived based on the sample and subjective matrices (106).

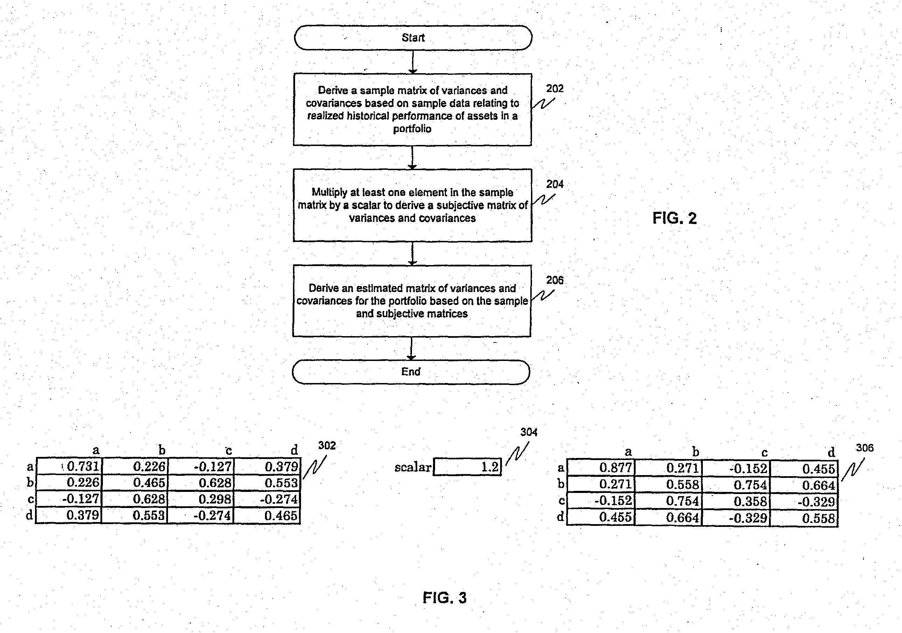

One method for estimating expected risk associated with a portfolio of assets is illustrated in Fig. 2. A sample matrix of variances and covariances is derived based on sample data relating to realized historical performance of assets in a portfolio (202). At least one element in the sample matrix is multiplied by a scalar to derive a subjective matrix of variances and covariances (204). The scalar may be selected by one or more analysts based on factors such as market conditions, past experiences, hunches, recent developments, etc. An estimated matrix of variances and covariances for the portfolio is then derived based on the sample and subjective matrices (206).

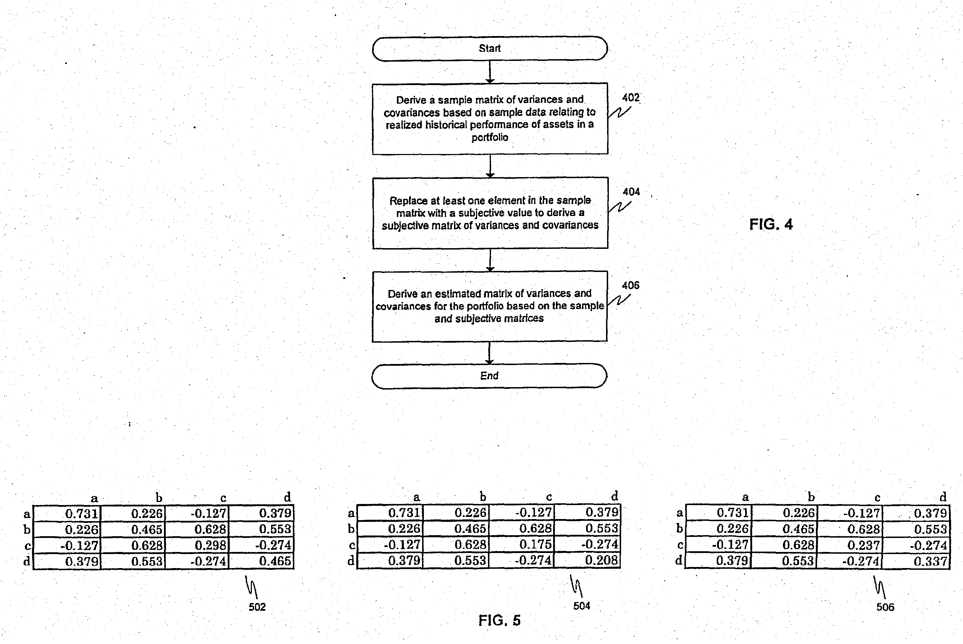

Fig. 3 depicts one example relating to the method illustrated in Fig. 2. A sample matrix 302 for a portfolio with four assets, a, b, c, and d, has been derived based on sample data relating to realized historical performance of those assets. The variance of assets a, b, c, and d are along the main diagonal in sample matrix 302-0.731, 0.465, 0.298, and 0.465, respectively. The covariance for each pair of assets are off the main diagonal. For example, assets a and c have a slight negative covariance of -0.127. In the example, all of the elements of sample matrix 302 are scaled by multiplying each element by scalar 304 to derive subjective matrix 306. In other embodiments, more than one scalar may be used to scale elements in a sample matrix. Additionally, less than all of the elements in a sample matrix may be scaled in further embodiments. An estimated matrix can then be derived based on sample matrix 302 and subjective matrix 306. The estimated matrix may be derived by, for example, taking the average of the sum of the sample and subjective matrices. The subjective matrix may also be used as the estimated matrix when the sample matrix is used to derive the subjective matrix.

Referring to Fig. 4, another method for estimating expected risk associated with a portfolio of assets is illustrated. In Fig. 4, rather than multiplying at least one element in the sample matrix by a scalar to derive a subjective matrix as in Fig. 2, at least one element in the sample matrix is replaced with a subjective value to derive a subjective matrix of variances and covariances (404). Subjective values may be selected by one or more analysts based on factors such as market conditions, past experiences, hunches, recent developments, etc.

Depicted in Fig. 5 is an example relating to the method illustrated in Fig. 4. A sample matrix 502 is shown for a portfolio with four assets―a, b, c, and d. In Fig. 5, the variance of asset c in sample matrix 502 is changed from 0.298 to 0.175 and the variance of asset d is changed from 0.465 to 0.208 to derive a subjective matrix 504. If asset d is a stock, the risk associated with the asset may have been lowered because the company has reduced its debts or recently developed a revolutionary product. In other embodiments, the number of elements in a sample matrix replaced with a subjective value may be more or less. An estimated matrix 506 is then derived by taking the average of the sum of sample matrix 502 and subjective matrix 506.

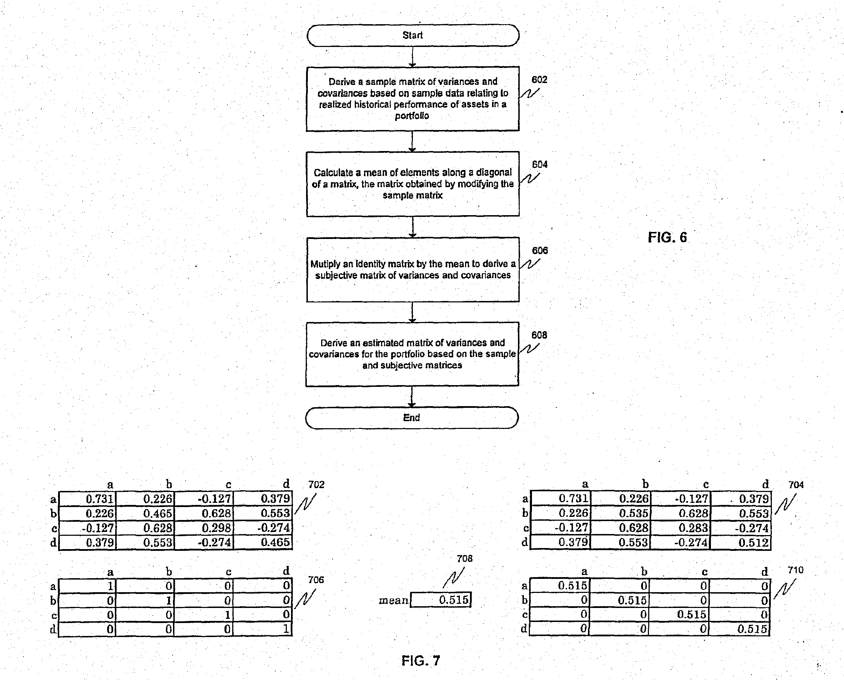

A further method for estimating expected risk associated with a portfolio of assets is illustrated in Fig. 6. A sample matrix of variances and covariances is derived based on sample data relating to realized historical performance of assets in a portfolio (602). A mean of elements along a diagonal of a matrix obtained by modifying the sample matrix is calculated (604) and an identity matrix is multiplied by the mean to derive a subjective matrix of variances and covariances (606). All elements of an identity matrix are zero, except for the main diagonal, where all elements are one. Dimensions of the sample and identity matrices are equal. An estimated matrix of variances and covariances for the portfolio is then derived based on the sample and subjective matrices (608).

Fig. 7 depicts one example relating to the method illustrated in Fig. 6. A sample matrix 702 with a 4 x 4 dimension is shown. A matrix 704 is obtained by scaling some of the elements of sample matrix 702. For example, the variance of asset b has been scaled by 1.15, the variance of asset c has been scaled by 0.95, and the variance of asset d has been scaled by 1.1. In other embodiments, a matrix 704 may be obtained by replacing one or more elements in sample matrix with a subjective value. An identity matrix 706, with the same dimension as sample matrix 702, is multiplied by a mean 708 of elements along the main diagonal of matrix 704 to derive a subjective matrix 710. An estimated matrix can then be derived based on sample matrix 702 and subjective matrix 710.

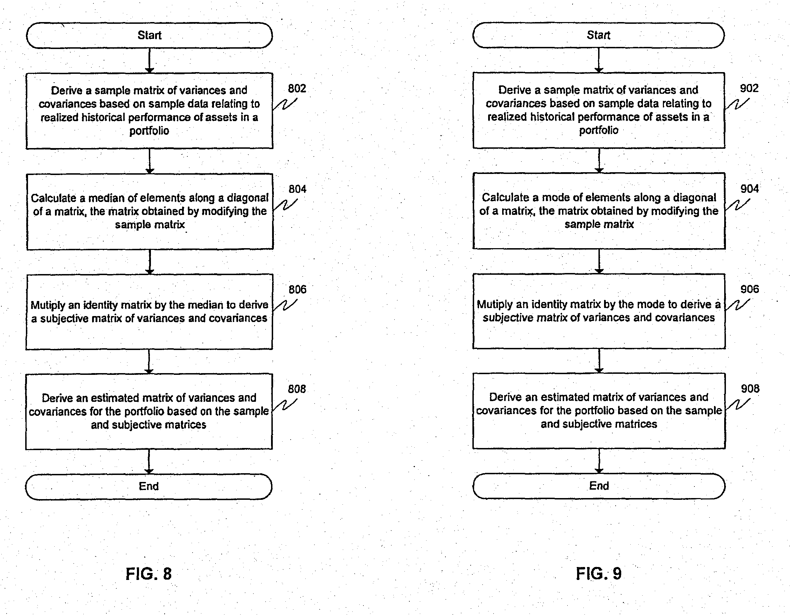

Illustrated in Figs. 8 and 9 are other methods for estimating expected risk associated with a portfolio of assets. In Fig. 8, rather than calculating a mean of elements along a diagonal of a matrix obtained by modifying the sample matrix and multiplying an identity matrix by the mean to derive a subjective matrix as in Fig. 6, a median of elements along a diagonal of a matrix obtained by modifying the sample matrix is calculated (804) and an identity matrix is multiplied by the median to derive a subjective matrix of variances and covariances (806). In Fig. 9, a mode of elements along a diagonal of a matrix obtained by modifying the sample matrix is calculated (904) and an identity matrix is multiplied by the mode to derive a subjective matrix of variances and covariances (906) instead. Thus, in the example depicted in Fig. 7, identity matrix 706 may be multiplied by a median or mode of elements along a diagonal of matrix 704 to derive different subjective matrices.

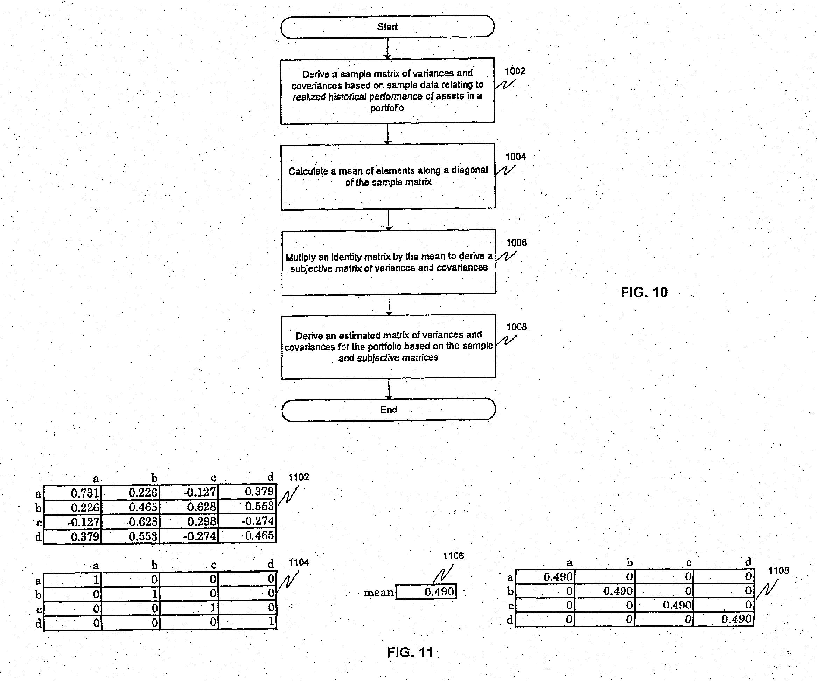

Fig. 10 illustrates a method for estimating expected risk associated with a portfolio of assets. A sample matrix of variances and covariances is derived based on sample data relating to realized historical performance of assets in a portfolio (1002). A mean of elements along a diagonal of the sample matrix is calculated (1004) and an identity matrix is multiplied by the mean to derive a subjective matrix of variances and covariances (1006). An estimated matrix of variances and covariances for the portfolio is then derived based on the sample and subjective matrices (1008).

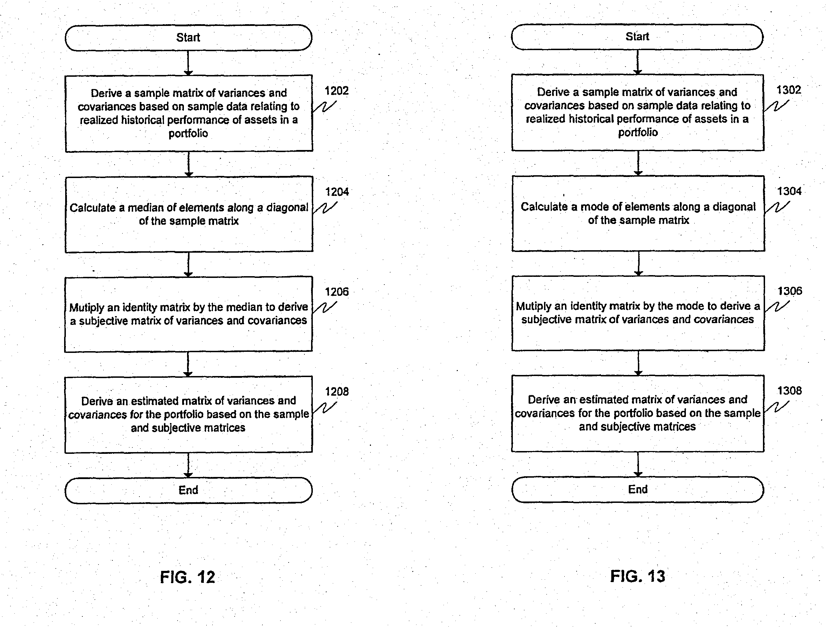

Depicted in Fig. 11 is one example relating to the method illustrated in Fig. 10. A sample matrix 1102 is shown. Subjective matrix 1108 is derived by multiplying an identity matrix 1104, which has the same dimensions as sample matrix 1102, by a mean 1106 of elements along the main diagonal of sample matrix 1102. An estimated matrix can then be derived based on sample matrix 1102 and subjective matrix 1108.

Other methods for estimating expected risk associated with a portfolio of assets are illustrated in Figs. 12 and 13. In Fig. 12, rather than calculating a mean of elements along a diagonal of the sample matrix and multiplying an identity matrix by the mean to derive a subjective matrix as in Fig. 10, a median of elements along a diagonal of the sample matrix is calculated (1204) and an identity matrix is multiplied by the median to derive a subjective matrix of variances and covariances (1206). In Fig. 13, a mode of elements along a diagonal of the sample matrix is calculated (1304) and an identity matrix is multiplied by the mode to derive a subjective matrix of variances and covariances (1306) instead. Thus, in the example depicted in Fig. 11, identity matrix 1104 may be multiplied by a median or mode of elements along a diagonal of sample matrix 1102 to derive different subjective matrices.

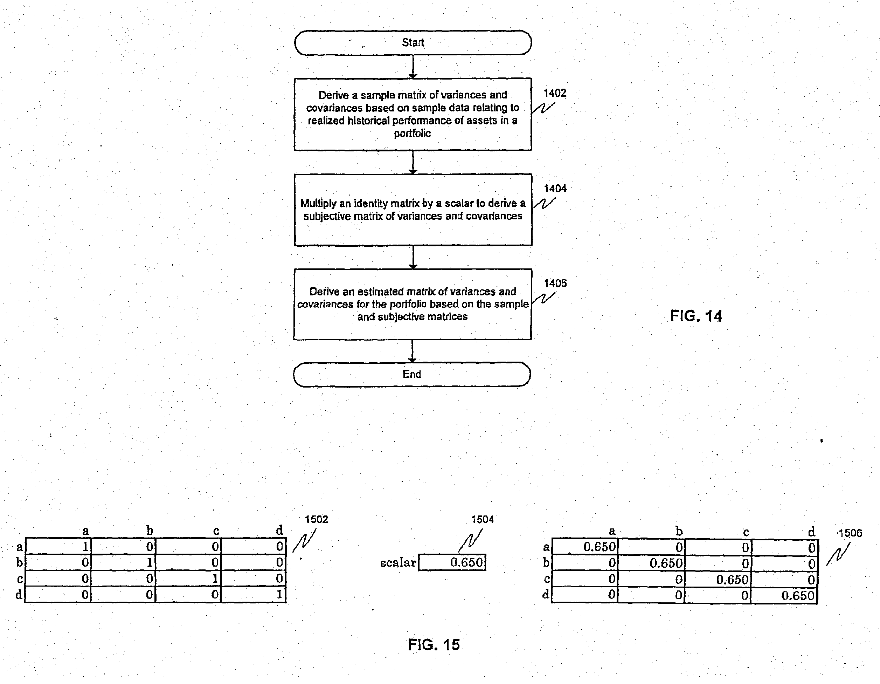

Another method for estimating expected risk associated with a portfolio of assets is illustrated in Fig. 14. A sample matrix of variances and covariances is derived based on sample data relating to realized historical performance of assets in a portfolio (1402). An identity matrix is multiplied by a scalar to derive a subjective matrix of variances and covariances (1404). The scalar may be selected by one or more analysts based on factors such as market conditions, past experiences, hunches, recent developments, etc. An estimated matrix of variances and covariances for the portfolio is derived based on the sample and subjective matrices (1406).

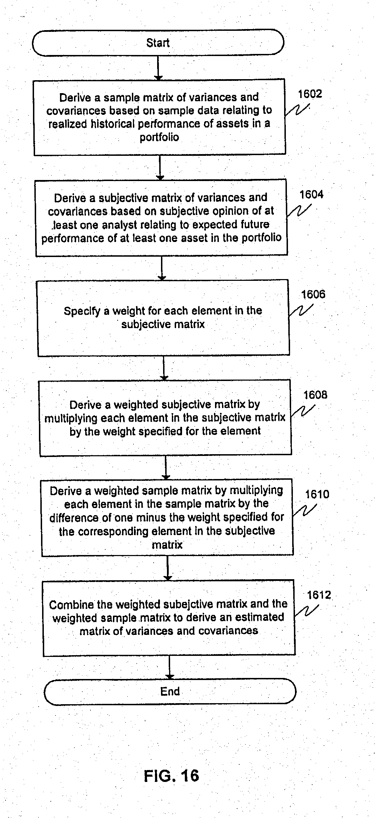

Referring to Fig. 15, one example relating to the method illustrated in Fig. 14 is depicted. In the example, an identity matrix 1502 is multiplied by a scalar 1504 to derive a subjective matrix 1506. In other embodiments, more than one scalar may be used.

Fig. 16 illustrates a further method for estimating expected risk associated with a portfolio of assets. In Fig. 16, a sample matrix of variances and covariances is derived based on sample data relating to realized historical performance of assets in a portfolio (1602). A subjective matrix of variances and covariances is derived based on subjective opinion of at least one analyst relating to expected future performance of at least one asset in the portfolio (1604). A weight for each element in the subjective matrix is specified (1606). The weight may reflect one or more analysts' confidence in the subjective estimates relative to the estimates based on historical sample data. A weighted subjective matrix is derived by multiplying each element in the subjective matrix by the weight specified for that element (1608). A weighted sample matrix is derived by multiplying each element in the sample matrix by the difference of one minus the weight specified for the corresponding element in the subjective matrix (1610). The weighted subjective matrix and the weighted sample matrix are then combined to derive an estimated matrix of variances and covariances (1612).

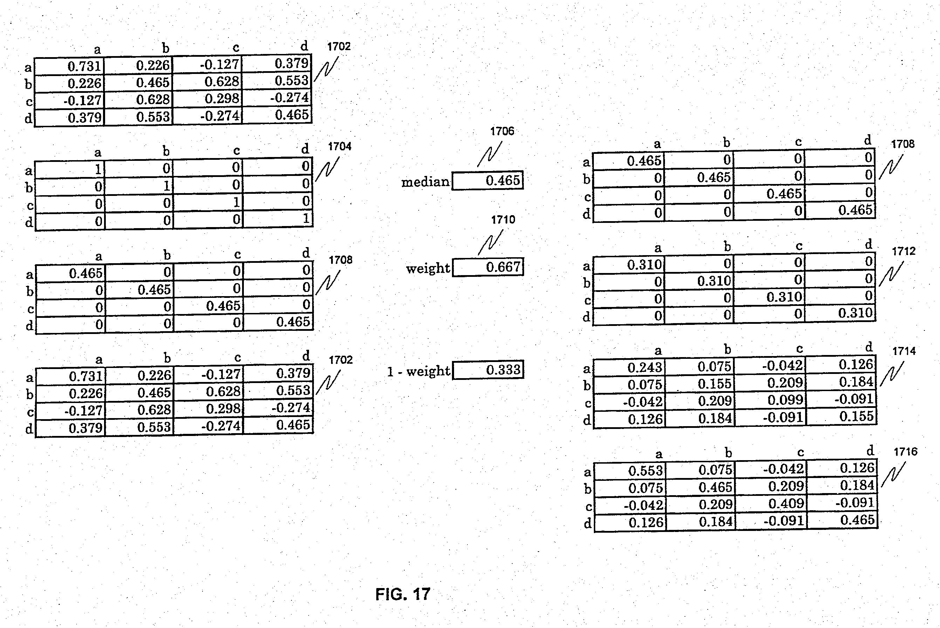

Depicted in Fig. 17 is an example relating to the method illustrated in Fig. 16. A sample matrix 1702 is shown. A subjective matrix 1708 is derived by multiplying an identity matrix 1704 by a median 1706 of elements along the main diagonal of sample matrix 1702. Each element in subjective matrix 1708 is multiplied by a weight 1710 to derive a weighted subjective matrix 1712. The weight in other embodiments may be a number greater than zero and less than or equal to one. In addition, a different weight may be specified for two or more elements in a subjective matrix in further embodiments. Each element in sample matrix 1702 is multiplied by one minus weight 1710 (1 - 0.667 = 0.333) to derive a weighted sample matrix 1714. Weighted subjective matrix 1712 and weighted sample matrix 1714 are then combined to derive an estimated matrix 1716.

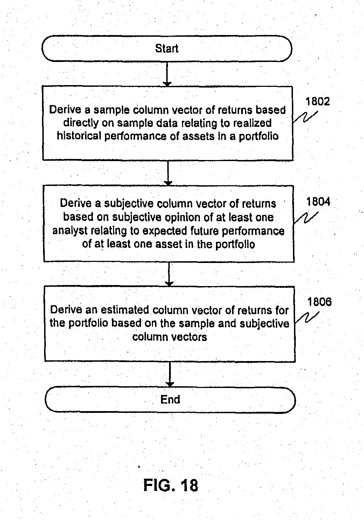

A method for estimating expected returns associated with a portfolio of assets is illustrated in Fig. 18. Expected returns may be expressed as a column vector of returns. A sample column vector of returns is derived based directly on sample data relating to realized historical performance of assets in a portfolio (1802). For example, elements of a sample column vector may be estimated by calculating the mean, i.e., the average, of historical returns. In other embodiments, the median, the mode, or a mix of the mean, median, and mode of historical sample data may be used to estimate elements of a sample column vector. Further, elements of a sample column vector may be estimated using statistical estimators such as the James-Stein statistic and the Frost-Savorino statistic. A subjective column vector of returns is derived based on subjective opinion of at least one analyst relating to expected future performance of at least one asset in the portfolio (1804). An estimated column vector of returns for the portfolio is then derived based on the sample and subjective column vectors (1806).

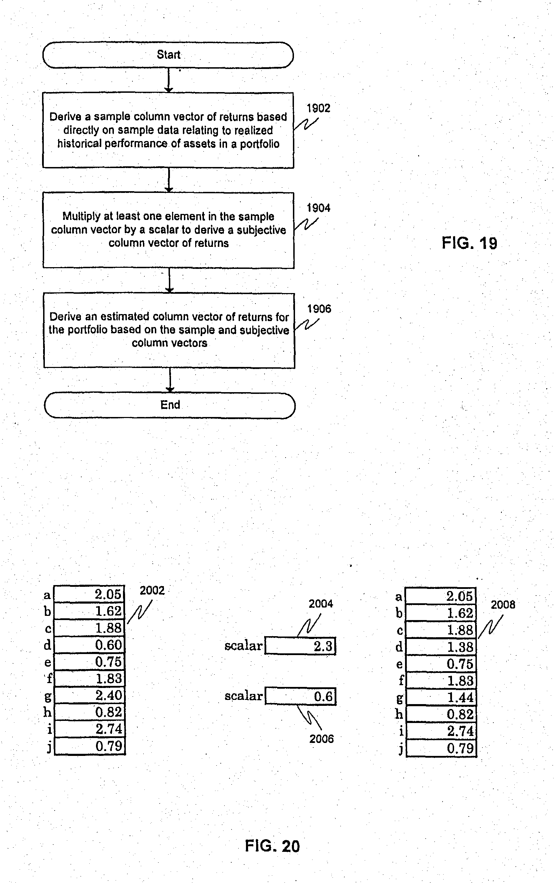

Fig. 19 illustrates one method for estimating expected returns associated with a portfolio of assets. In Fig. 19, a sample column vector of returns is derived based directly on sample data relating to realized historical performance of assets in a portfolio (1902). At least one element in the sample column vector is multiplied by a scalar to derive a subjective column vector of returns (1904). An estimated column vector of returns for the portfolio is then derived based on the sample and subjective column vectors (1906).

Referring to Fig. 20, an example relating to the method illustrated in Fig. 19 is depicted. A sample column vector 2002 for a portfolio with ten assets has been derived based directly on sample data relating to realized historical performance of those assets. In Fig. 20, the expected return of asset d is scaled by a scalar 2004 and the expected return of asset g is scaled by a scalar 2006 to derive a subjective column vector 2008. In other embodiments, the number of sample column vector elements that is scaled may be less or more. Additionally, one scalar may be used to scale more than one element in a sample column vector in further embodiments. An estimated column vector of returns can then be derived based on sample column vector 2002 and subjective column vector 2008. For example, an estimated column vector may be derived by taking the average of the sum of the sample and subjective column vectors.

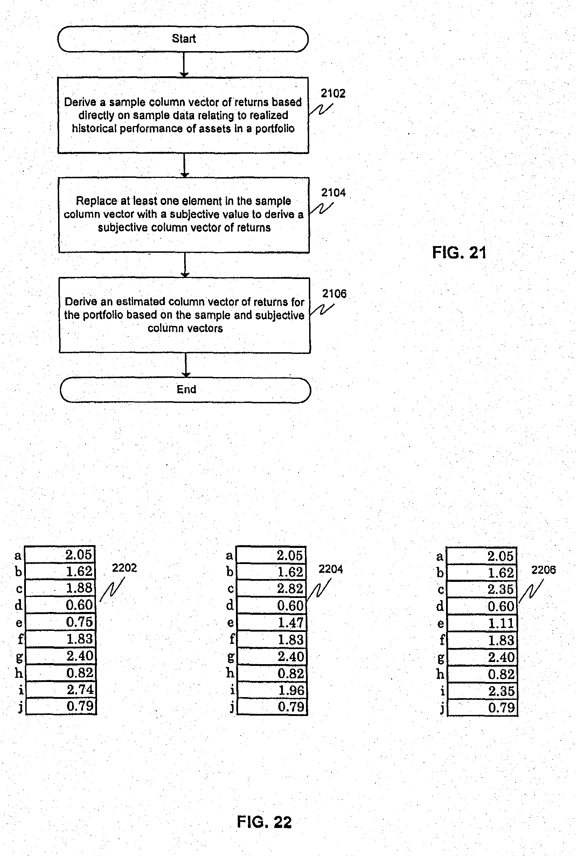

Another method for estimating expected returns associated with a portfolio of assets is illustrated in Fig. 21. Rather than multiplying at least one element in the sample column vector by a scalar to derive a subjective column vector of returns as in Fig. 19, at least one element in the sample column vector is replaced with a subjective value to derive a subjective column vector of returns (2104). Subjective values may be selected by one or more analysts based on factors such as market conditions, past experiences, hunches, recent developments, etc.

Depicted in Fig. 22 is one example relating to the method illustrated in Fig. 21. A sample column vector 2202 is shown. The expected return of asset c is changed from 1.88 to 2.82, the expected return of asset e is changed from 0.75 to 1.47, and the expected return of asset i is changed from 2.74 to 1.96 to derive a subjective column vector 2204. The number of elements in a sample column vector replaced with a subjective value may be less or more in other embodiments. If asset i is a hedge fund, the expected return may have been lowered because the market is in a down cycle or the hedge fund manager has been changed. An estimated column vector 2206 is then derived by taking the average of the sum of the sample 2202 and subjective 2204 column vectors.

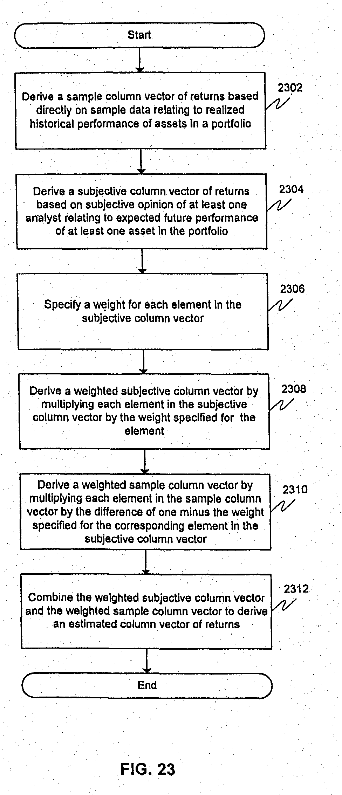

Fig. 23 illustrates a further method for estimating expected returns associated with a portfolio of assets. A sample column vector of returns is derived based directly on sample data relating to realized historical performance of assets in a portfolio (2302). A subjective column vector of returns is derived based on subjective opinion of at least one analyst relating to expected future performance of at least one asset in the portfolio (2304). A weight for each element in the subjective column vector is specified (2306). The weight may reflect one or more analysts' confidence in the subjective estimates relative to the estimates based on historical sample data. A weighted subjective column vector is derived by multiplying each element in the subjective column vector by the weight specified for that element (2308). A weighted sample column vector is derived by multiplying each element in the sample column vector by the difference of one minus the weight specified for the corresponding element in the subjective column vector (2310). The weighted subjective column vector and the weighted sample column vector are then combined to derive an estimated column vector of returns (2312).

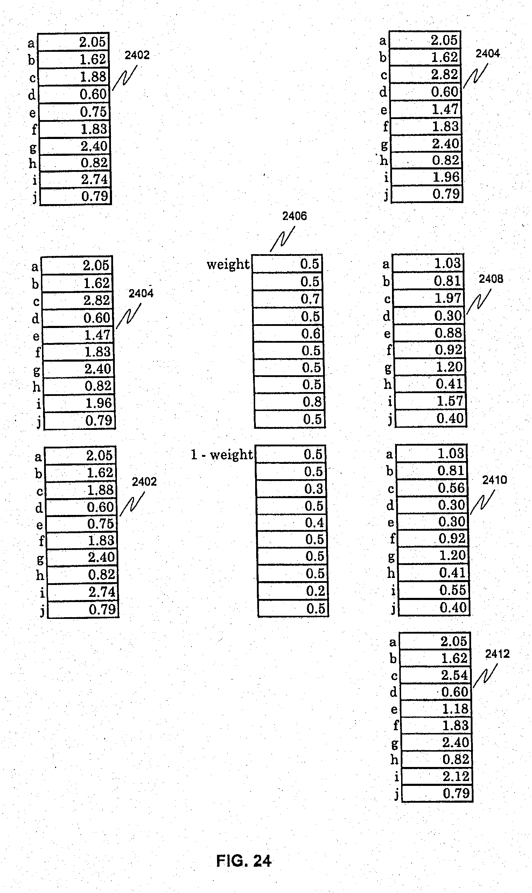

One example relating to the method illustrated in Fig. 23 is depicted in Fig. 24. A sample column vector 2402 is shown. A subjective column vector 2404 is derived by replacing the expected return of assets c, e, and i with subjective values. Each element in subjective column vector 2404 is multiplied by a weight specified for that element in column 2406 to derive a weighted subjective column vector 2408. Four different weights are specified. In other embodiments, the number of weights specified may be less or more. Additionally, the weight in other embodiments may be a number greater than zero and less than or equal to one. Each element in sample column vector 2402 is multiplied by the difference of one minus the weight specified for the corresponding element in subjective column vector 2404 to derive a weighted sample column vector 2410. For example, asset c in sample column vector 2402 is multiplied by one minus the weight specified in column 2406 for asset c in subjective column vector 2404 (1 - 0.7 = 0.3). Weighted subjective column vector 2408 and weighted sample column vector 2410 are then combined to derive an estimated column vector 2412.

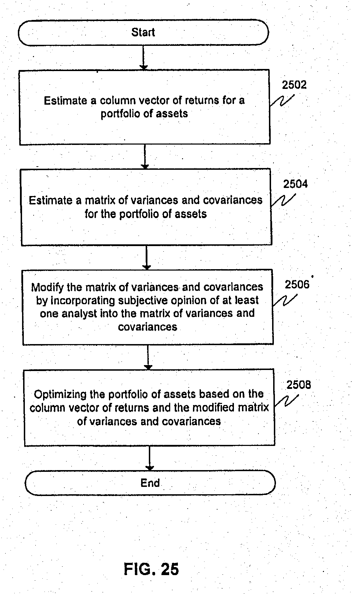

Illustrated in Fig. 25 is a method for optimizing a portfolio of assets. A column vector of returns for a portfolio of assets is estimated (2502). A matrix of variances and covariances for the portfolio of assets is estimated (2504). The matrix of variances and covariances is modified by incorporating subjective opinion of at least one analyst into the matrix of variances and covariances (2506). The portfolio of assets is then optimized based on the column vector of returns and the modified matrix of variances and covariances (2508).

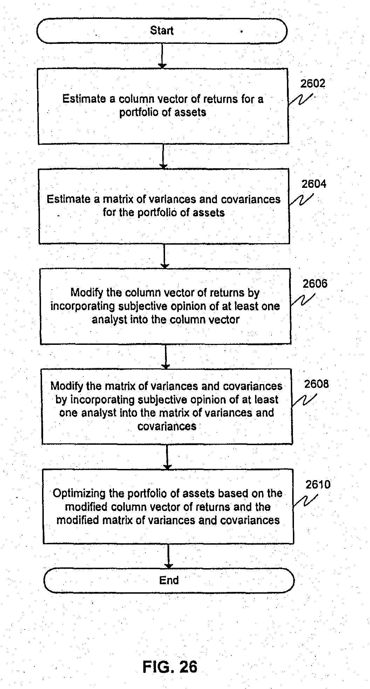

Fig. 26 illustrates another method for optimizing a portfolio of assets. In this embodiment, the column vector of returns is also modified by incorporating subjective opinion of at least one analyst into the column vector (2606). The portfolio of assets is then optimized based on the modified column vector of returns and the modified matrix of variances and covariances (2610).

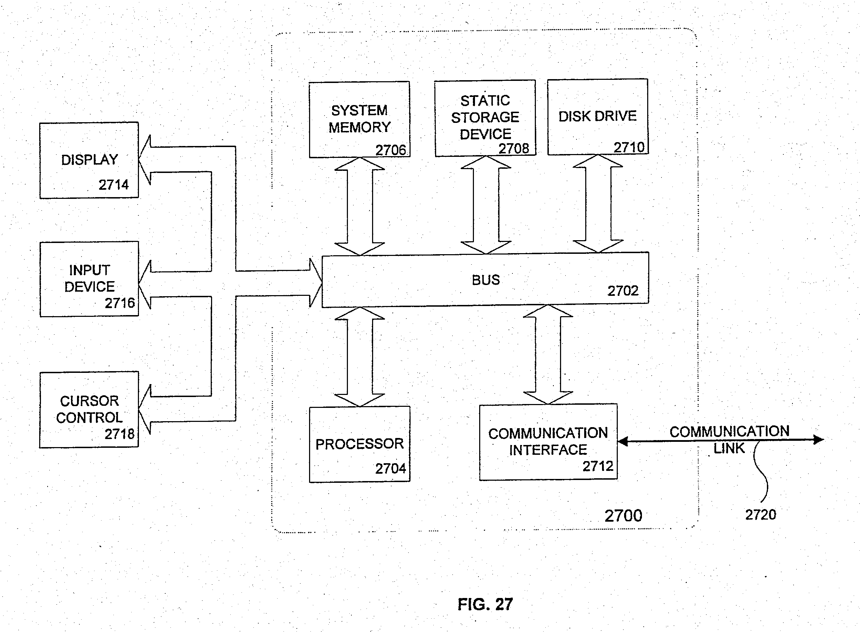

Fig. 27 is a block diagram of a computer system 2700 suitable for implementing an embodiment of the present invention. Computer system 2700 includes a bus 2702 or other communication mechanism for communicating information, which interconnects subsystems and devices, such as processor 2704, system memory 2706 (e.g., RAM), static storage device 2708 (e.g., ROM), disk drive 2710 (e.g., magnetic or optical), communication interface 2712 (e.g., modem or ethernet card), display 2714 (e.g., CRT or LCD), input device 2716 (e.g., keyboard), and cursor control 2718 (e.g., mouse or trackball).

According to one embodiment of the invention, computer system 2700 performs specific operations by processor 2704 executing one or more sequences of one or more instructions contained in system memory 2706. Such instructions may be read into system memory 2706 from another computer readable medium, such as static storage device 2708 or disk drive 2710. In alternative embodiments, hard-wired circuitry may be used in place of or in combination with software instructions to implement the invention.

The term "computer readable medium" as used herein refers to any medium that participates in providing instructions to processor 2704 for execution. Such a medium may take many forms, including but not limited to, non-volatile media, volatile media, and transmission media. Non-volatile media includes, for example, optical or magnetic disks, such as disk drive 2710. Volatile media includes dynamic memory, such as system memory 2706. Transmission media includes coaxial cables, copper wire, and fiber optics, including wires that comprise bus 2702. Transmission media can also take the form of acoustic or light waves, such as those generated during radio wave and infrared data communications.

Common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, carrier wave, or any other medium from which a computer can read.

In an embodiment of the invention, execution of the sequences of instructions to practice the invention is performed by a single computer system 2700. According to other embodiments of the invention, two or more computer systems 2700 coupled by communication link 2720 (e.g., LAN, PTSN, or wireless network) may perform the sequence of instructions required to practice the invention in coordination with one another.

Computer system 2700 may transmit and receive messages, data, and instructions, including program, i.e., application code, through communication link 2720 and communication interface 2712. Received program code may be executed by processor 2704 as it is received, and/or stored in disk drive 2710, or other non-volatile storage for later execution.

As will be understood by those familiar with the art, the present invention may be embodied in other specific forms without departing from the spirit or essential characteristics thereof. For example, the above-described process flows are described with reference to a particular ordering of process actions. However, the ordering of many of the described process actions may be changed without affecting the scope or operation of the invention. Accordingly, the disclosures and descriptions herein are intended to be illustrative, but not limiting, of the scope of the invention which is set forth in the following claims.

## Claims

1. A system for estimating expected risk associated with a portfolio of assets, wherein expected risk is expressed as a matrix of variances and covariances of expected portfolio returns, comprising:
means for deriving a sample matrix of variances and covariances from input sample data relating to realized historial performance of assets in a portfolio;
means for deriving a subjective matrix of variances and covariances for input data representing a subjective opinion of at least one analyst relating to expected future performance of at least one asset in the portfolio; and
means for deriving an estimated matrix of variances and covariances for the portfolio based on the sample and subjective matrices.

2. The system of claim 1 wherein the means for deriving a subjective matrix is arranged to multiply at least one element in the sample matrix by a scalar to derive the subjective matrix.

3. The system of claim 1 wherein the means for deriving a subjective matrix is arranged to replace at least one element in the sample matrix with a subjective value to derive the subjective matrix.

4. The system of claim 1 wherein the means for deriving a subjective matrix is arranged to:
calculate one of a mean, a median and a mode of elements along a diagonal of a matrix, the matrix obtained by modifying the sample matrix; and
multiply an identity matrix by the one of the mean, the median and the mode to derive the subjective matrix.

5. The system of claim 1 wherein the means for deriving a subjective matrix is arranged to:
calculate one of a mean, a median and a mode of elements along a diagonal of the sample matrix; and
multiply an identity matrix by the one of the mean, the median and the mode to derive the subjective matrix.

6. The system of claim 1 wherein the means for deriving a subjective matrix is arranged to multiply an identity matrix by a scalar to derive the subjective matrix.

7. The system of claim 1 wherein the means for deriving an estimated matrix of variances and covariances is arranged to:
allow a weight to be specified for each element in the subjective matrix;
derive a weighted subjective matrix by multiplying each element in the subjective matrix by the weight specified for the element;
derive a weighted sample matrix by multiplying each element in the sample matrix by the difference of one minus the weight specified for the corresponding element in the subjective matrix; and
combine the weighted subjective matrix and the weighted sample matrix to derive the estimated matrix of variances and covariances.

8. A system for estimating expected returns associated with a portfolio of assets, wherein expected returns is expressed as a column vector of returns, comprising:
means for deriving a sample column vector of returns from input sample data relating to realized historical performance of assets in a portfolio;
means for deriving a subjective column vector of returns from input data representing a subjective opinion of at least one analyst relating to expected future performance of at least one asset in the portfolio; and
means for deriving an estimated column vector of returns for the portfolio based on the sample and subjective column vectors.

9. The system of claim 8 wherein the means for deriving a subjective column vector of returns is arranged to multiply at least one element in the sample column vector by a scalar to derive the subjective column vector.

10. The system of claim 8 wherein the means for deriving a subjective column vector of returns is arranged to replace at least one element in the sample column vector with a subjective value to derive the subjective column vector.

11. The system of claim 8 wherein the means for deriving an estimated column vector of returns is arranged to:
allow a weight to be specified for each element in the subjective column vector;
derive a weighted subjective column vector by multiplying each element in the subjective column vector by the weight specified for the element;
derive a weighted sample column vector by multiplying each element in the sample column vector by the difference of one minus the weight specified for the corresponding element in the subjective column vector; and
combine the weighted subjective column vector and the weighted sample column vector to derive the estimated column vector of returns.

12. A system for optimizing a portfolio of assets comprising:
means for estimating a column vector of returns for a portfolio of assets;
means for estimating a matrix of variances and covariances for the portfolio of assets;
means for modifying the matrix of variances and covariances by incorporating subjective opinion of at least one analyst into the matrix of variances and covariances; and
means for optimizing the portfolio of assets based on the column vector of returns and the modified matrix of variances and covariances.

13. A system for optimizing a portfolio of assets comprising:
means for estimating a column vector of returns for the portfolio of assets;
means for estimating a matrix of variances and covariances for the portfolio of assets;
means for modifying the column vector of returns by incorporating subjective opinion of at least one analyst into the column vector;
means for modifying the matrix of variances and covariances by incorporating subjective opinion of at least one analyst into the matrix; and
means for optimizing the portfolio of assets based on the modified column vector of returns and the modified matrix of variances and covariances.

14. A method for estimating expected risk associated with a portfolio of assets, wherein expected risk is expressed as a matrix of variances and covariances of expected portfolio returns, comprising:
deriving a sample matrix of variances and covariances based on sample data relating to realized historical performance of assets in a portfolio;
deriving a subjective matrix of variances and covariances based on subjective opinion of at least one analyst relating to expected future performance of at least one asset in the portfolio; and
deriving an estimated matrix of variances and covariances for the portfolio based on the sample and subjective matrices.

15. The method of claim 14 wherein deriving a subjective matrix comprises multiplying at least one element in the sample matrix by a scalar to derive the subjective matrix.

16. The method of claim 14 wherein deriving a subjective matrix comprises replacing at least one element in the sample matrix with a subjective value to derive the subjective matrix.

17. The method of claim 14 wherein deriving a subjective matrix comprises:
calculating one of a mean, a median and a mode of elements along a diagonal of a matrix, the matrix obtained by modifying the sample matrix; and
multiplying an identity matrix by the one of the mean, the median and the mode to derive the subjective matrix.

18. The method of claim 1 wherein deriving a subjective matrix comprises:
calculating one of a mean, a median and a mode of elements along a diagonal of the sample matrix; and
multiplying an identity matrix by the one of the mean, the median and the mode to derive the subjective matrix.

19. The method of claim 14 wherein deriving a subjective matrix comprises multiplying an identity matrix by a scalar to derive the subjective matrix.

20. The method of claim 14 wherein deriving an estimated matrix of variances and covariances comprises:
specifying a weight for each element in the subjective matrix;
deriving a weighted subjective matrix by multiplying each element in the subjective matrix by the weight specified for the element;
deriving a weighted sample matrix by multiplying each element in the sample matrix by the difference of one minus the weight specified for the corresponding element in the subjective matrix; and
combining the weighted subjective matrix and the weighted sample matrix to derive the estimated matrix of variances and covariances.

21. A method for estimating expected returns associated with a portfolio of assets, wherein expected returns is expressed as a column vector of returns, comprising:
deriving a sample column vector of returns based directly on sample data relating to realized historical performance of assets in a portfolio;
deriving a subjective column vector of returns based on subjective opinion of at least one analyst relating to expected future performance of at least one asset in the portfolio; and
deriving an estimated column vector of returns for the portfolio based on the sample and subjective column vectors.

22. The method of claim 21 wherein deriving a subjective column vector of returns comprises multiplying at least one element in the sample column vector by a scalar to derive the subjective column vector.

23. The method of claim 21 wherein deriving a subjective column vector of returns comprises replacing at least one element in the sample column vector with a subjective value to derive the subjective column vector.

24. The method of claim 21 wherein deriving an estimated column vector of returns comprises:
specifying a weight for each element in the subjective column vector;
deriving a weighted subjective column vector by multiplying each element in the subjective column vector by the weight specified for the element;
deriving a weighted sample column vector by multiplying each element in the sample column vector by the difference of one minus the weight specified for the corresponding element in the subjective column vector; and
combining the weighted subjective column vector and the weighted sample column vector to derive the estimated column vector of returns.

25. A method for optimizing a portfolio of assets comprising:
estimating a column vector of returns for a portfolio of assets;
estimating a matrix of variances and covariances for the portfolio of assets;
modifying the matrix of variances and covariances by incorporating subjective opinion of at least one analyst into the matrix of variances and covariances; and
optimizing the portfolio of assets based on the column vector of returns and the modified matrix of variances and covariances.

26. A method for optimizing a portfolio of assets comprising:
estimating a column vector of returns for the portfolio of assets;
estimating a matrix of variances and covariances for the portfolio of assets;
modifying the column vector of returns by incorporating subjective opinion of at least one analyst into the column vector;
modifying the matrix of variances and covariances by incorporating subjective opinion of at least one analyst into the matrix; and
optimizing the portfolio of assets based on the modified column vector of returns and the modified matrix of variances and covariances.

27. A computer program product that includes a computer-readable medium having a sequence of instructions which, when executed by a processor, causes the processor to execute a process for estimating expected risk associated with a portfolio of assets, wherein expected risk is expressed as a matrix of variances and covariances of expected portfolio returns, the process comprising the steps of any one of claims 14 to 20.

28. A computer program product that includes a computer-readable medium having a sequence of instructions which, when executed by a processor, causes the processor to execute a process for estimating expected returns associated with a portfolio of assets, wherein expected returns is expressed as a column vector of returns, the process comprising the steps of any one of claims 21 to 26.

29. A computer program product that includes a computer-readable medium having a sequence of instructions which, when executed by a processor, causes the processor to execute a process for optimizing a portfolio of assets, the process comprising:
estimating a column vector of returns for a portfolio of assets;
estimating a matrix of variances and covariances for the portfolio of assets;
modifying the matrix of variances and covariances by incorporating subjective opinion of at least one analyst into the matrix of variances and covariances; and
optimizing the portfolio of assets based on the column vector of returns and the modified matrix of variances and covariances.

30. A computer program product that includes a computer-readable medium having a sequence of instructions which, when executed by a processor, causes the processor to execute a process for optimizing a portfolio of assets, the process comprising:
estimating a column vector of returns for the portfolio of assets;
estimating a matrix of variances and covariances for the portfolio of assets;
modifying the column vector of returns by incorporating subjective opinion of at least one analyst into the column vector;
modifying the matrix of variances and covariances by incorporating subjective opinion of at least one analyst into the matrix; and
optimizing the portfolio of assets based on the modified column vector of returns and the modified matrix of variances and covariances.
